# EUROPEAN PATENT APPLICATION

(11) **EP 4 527 648 A1**
(43) Date of publication of application: **26.03.2025**
(21) Application number: 23807625.1
(22) Date of filing: 16.05.2023
(51) Int. Cl.: B60J 5/04, B62D 25/00

(54) **OUTER PANEL**

(30) Priority: 20.05.2022 JP 2022083099
(71) Applicant: NIPPON STEEL CORPORATION, Chiyoda-ku Tokyo 100-8071 (JP)
(72) Inventor: SAWA Yasunori, Tokyo 100-8071 (JP); NISHIMURA Ryuichi, Tokyo 100-8071 (JP)
(74) Representative: Vossius & Partner Patentanwälte Rechtsanwälte mbB
(86) International application number: PCT/JP2023/018223
(87) International publication number: WO 2023/224023

(57) **Abstract**

An outer panel includes a ridgeline and a surface portion adjacent to both sides of the ridgeline on an outer surface. The outer panel has a sheet thickness of less than 0.6 mm and an attainable yield stress of 360 MPa or more. The surface portion includes an adjacent region adjacent to the ridgeline and a separation region adjacent to the adjacent region on an opposite side of the ridgeline. Evaluations of surface properties of the adjacent region and the separation region are consistent with each other.

## Description

### TECHNICAL FIELD

The present invention relates to an outer panel. Priority is claimed on Japanese Patent Application No. 2022-083099 filed May 20, 2022, the content of which is incorporated herein by reference.

### BACKGROUND ART

In a vehicle body of a vehicle, there is a tendency to emphasize not only weight reduction and cost reduction for reducing CO2 emissions but also designability. For that purpose, a technique is effective that improves, suppresses, and evaluates poor surface quality causing a reduction in designability. Examples of the poor surface quality include surface distortion and line displacement corresponding to very small wrinkles. The line displacement is the poor surface quality occurring as follows: when a blank is press-formed to obtain a formed article having a ridgeline, a local shape change occurs near a design line (character line) expressed by a ridgeline having a relatively large curvature; and the shape change is moved outside the design line and is visible as a linear shape even after coating.

Conventional examples of measures against the line displacement include a measure that, for example, optimizes a press direction or changes an inflow balance of a material into a die and punch to prevent a local shape change occurring in an early stage of press forming from being moved outside the design line and a measure that suppresses the local shape change to a level that is acceptable as surface quality even when the local shape change is moved outside the design line.

Patent Document 1 discloses a technique that relatively moves a die to a punch such that a punch-side elastic body provided to protrude from a punch-side forming surface portion for forming a panel surface portion and a die-side elastic body provided to protrude from a die-side forming surface portion for forming a panel surface portion are brought into contact with a metal element sheet, relatively moves the die to the punch up to a bottom dead point of forming while bringing the punch-side elastic body and the die-side elastic body into contact with the metal element sheet, and press-forms an outer panel for a vehicle while crushing the punch-side elastic body and the die-side elastic body, in order to prevent line displacement and to form a character line.

### Citation List

### Patent Document

Patent Document 1: Japanese Patent No. 6996605

### SUMMARY OF INVENTION

### Technical Problem

According to the technique described in Patent Document 1, it is possible to prevent the line displacement and to form a target character line without increasing the number of steps in press forming, but the apparatus is complicated.

However, when the outer panel is thinned in order to reduce the weight of the vehicle body of the vehicle, dent resistance is reduced. It is considered that a high-strength material is used for the outer panel in order to maintain the dent resistance even when the outer panel is thinned. However, it is generally said that the line displacement is more significant as the strength of the material is higher even when the sheet thickness is the same.

Therefore, the present invention has been made in view of the above problems, and an object of the present invention is to provide an outer panel that has a character line, ensures dent resistance, and has a beautiful appearance.

### Solution to Problem

The present inventors focused on the inflow of a material into a die and punch during press forming and thoroughly studied conditions under which no line displacement occurs on an outer surface of an outer panel manufactured by press forming. As a result, it was found that, when a sheet thickness was reduced, a difference between stress inside a bend and stress outside the bend occurring during press forming was reduced, the occurrence of a local reduction in the sheet thickness was suppressed, and line displacement was suppressed.

The gist of the present invention completed on the basis of the above findings is as follows.
[1] According to an aspect of the present invention, there is provided an outer panel including a ridgeline and a surface portion adjacent to both sides of the ridgeline on an outer surface. The outer panel has a sheet thickness of less than 0.6 mm and an attainable yield stress of 360 MPa or more. The surface portion includes an adjacent region adjacent to the ridgeline and a separation region adjacent to the adjacent region on an opposite side of the ridgeline on both sides of the ridgeline, and an evaluation of surface properties of the adjacent region and an evaluation of surface properties of the separation region are consistent with each other.
[2] In the outer panel according to [1], the adjacent region may be a band region having a length of 20 mm in an arrangement direction with the separation region, and the separation region may be a band region having a length of 20 mm in an arrangement direction with the adjacent region.
[3] In the outer panel according to [1] or [2], the evaluation may be an evaluation based on a difference between the maximum value and the minimum value of secondary differential coefficients of a shape of the outer surface in a cross section crossing the ridgeline.
[4] In the outer panel according to [1] or [2], the radius of curvature of the ridgeline in a cross section orthogonal to the ridgeline may be equal to or less than 20 mm.
[5] In the outer panel according to [1] or [2], a plurality of the ridgelines may be provided, and the ridgelines may not intersect each other.
[6] In the outer panel according to [5], an interval between at least two of the plurality of ridgelines may be less than 20 mm.
[7] In the outer panel according to [1] or [2], a plurality of the ridgelines may be provided, and two or more of the plurality of ridgelines may intersect each other.
[8] The outer panel according to any one of [1] to [7] may be made of steel.
[9] The outer panel according to any one of [1] to [8] may have a sheet thickness of 0.5 mm or less and an attainable yield stress of 590 MPa or more, and the radius of curvature of the ridgeline in a cross section orthogonal to the ridgeline may be equal to or less than 10 mm.
[10] In the outer panel according to any one of [1] to [9], a difference ΔP/B between the maximum value and the minimum value of secondary differential coefficients of the shape of the outer surface in both the adjacent region and the separation region measured across the ridgeline may be equal to or less than 0.012/mm.
[11] In the outer panel according to any one of [1] to [10], the evaluation may be an evaluation based on an amount of reduction in the sheet thickness.
[12] In addition, according to another aspect of the present invention, there is provided an outer panel including a ridgeline and a surface portion adjacent to both sides of the ridgeline on an outer surface. The outer panel has a sheet thickness of less than 0.6 mm and an attainable yield stress of 360 MPa or more. The surface portion includes an adjacent region adjacent to the ridgeline and a separation region adjacent to the adjacent region on an opposite side of the ridgeline on both sides of the ridgeline, and a difference ΔP/B between the maximum value and the minimum value of secondary differential coefficients of a shape of the outer surface in the adjacent region measured across the ridgeline is equal to or less than 0.012/mm.

### Advantageous Effects of Invention

As described above, according to the aspects of the present invention, it is possible to provide an outer panel that has a character line, ensures dent resistance, and has a beautiful appearance.

### BRIEF DESCRIPTION OF DRAWINGS

[FIG. 1A] A view showing an outline of press forming in a case where line displacement occurs.
[FIG. 1B] A view showing an outline of press forming in a case where no line displacement occurs.
[FIG. 2] A side view showing an outer panel according to an embodiment of the present invention.
[FIG. 3] A perspective view showing another example of the outer panel according to the embodiment.
[FIG. 4] A graph showing an example of measurement results of secondary differential coefficients of a shape of an outer surface in which the line displacement is visible.
[FIG. 5] A graph showing an example of measurement results of secondary differential coefficients of a shape of an outer surface in which no line displacement is visible.
[FIG. 6] A side view showing a modification example of the outer panel according to the embodiment.
[FIG. 7] A diagram showing conditions of a line displacement reproduction test.
[FIG. 8] A graph showing a relationship between the radius of curvature R of a ridgeline and a difference ΔP/B between the maximum value and the minimum value of secondary differential coefficients of a surface shape of a test piece and when the strength and sheet thickness of a steel sheet are changed.

### DESCRIPTION OF EMBODIMENTS

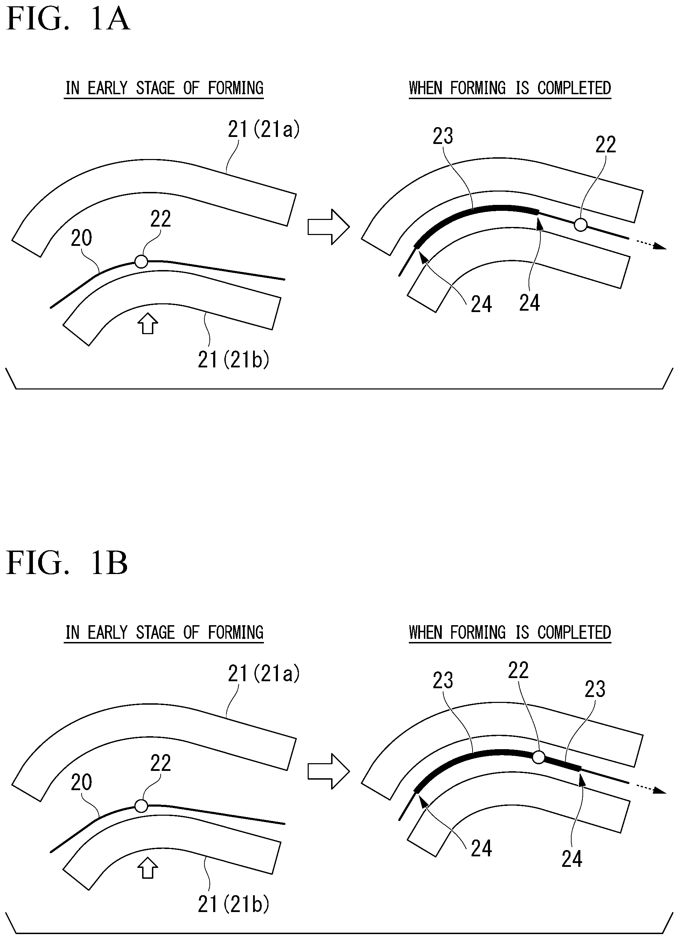

Prior to the description of an outer panel according to an embodiment of the present invention, a mechanism for the occurrence of line displacement in a press-formed article in press forming for forming a character line will be described with reference to FIGS. 1A and 1B. FIG. 1A is a view showing an outline of press forming in a case where line displacement occurs. FIG. 1B is a view showing an outline of press forming in a case where no line displacement occurs.

In FIGS. 1A and 1B, a die 21 includes an upper die 21a and a lower die 21b, and a blank 20 is sandwiched between the upper die 21a and the lower die 21b and is press-formed.

In an early stage of the press forming, the blank 20 comes into contact with a design character line (not shown) on the die 21. A portion that is in contact with the design character line in the blank 20 is referred to as an initial striking part 22. As the press with the die 21 progresses and the forming of a character line 23 (corresponding to a ridgeline according to the present invention) progresses, the initial striking part 22 is moved. In a case where line displacement occurs, after the completion of the forming, the initial striking part 22 is positioned outside an R stop 24 of the character line 23. The initial striking part 22 is a portion in which strain is introduced into the blank 20 in the early stage of the press forming and which has higher hardness than other portions. Since a hardness difference between the initial striking part 22 and other portions occurs, stress is concentrated in the vicinity of the initial striking part 22, and a sheet thickness in the vicinity of the initial striking part 22 is locally reduced. In this portion, a dent is formed in an outer surface of the outer panel after the press forming. This dent is the line displacement. When the initial striking part 22 is positioned in a smooth region outside the R stop 24, the line displacement may be visible. As a result, the beauty of the surface of the outer panel may be spoiled. In addition, the outer surface is a surface that can be visible in normal use. For example, in an outer panel of a moving body, such as a vehicle, a surface on the outside of the vehicle is referred to as the outer surface.

Meanwhile, as shown in FIG. 1B, in a case where the initial striking part 22 between the blank 20 and the die 21 is located inside the R stop 24 of the character line 23 when the press forming is completed, the character line 23 is curved. Therefore, the line displacement is not visible. As a result, the outer panel having a beautiful appearance is obtained.

When the initial striking part 22 is disposed inside the character line 23, the line displacement is not visible. However, the present inventors have studied a technique to prevent the line displacement from being visible even when the initial striking part 22 is disposed outside the character line 23. As a result, it was found that, when the sheet thickness was less than 0.6 mm, it was possible to obtain an outer panel having a character line and a beautiful appearance.

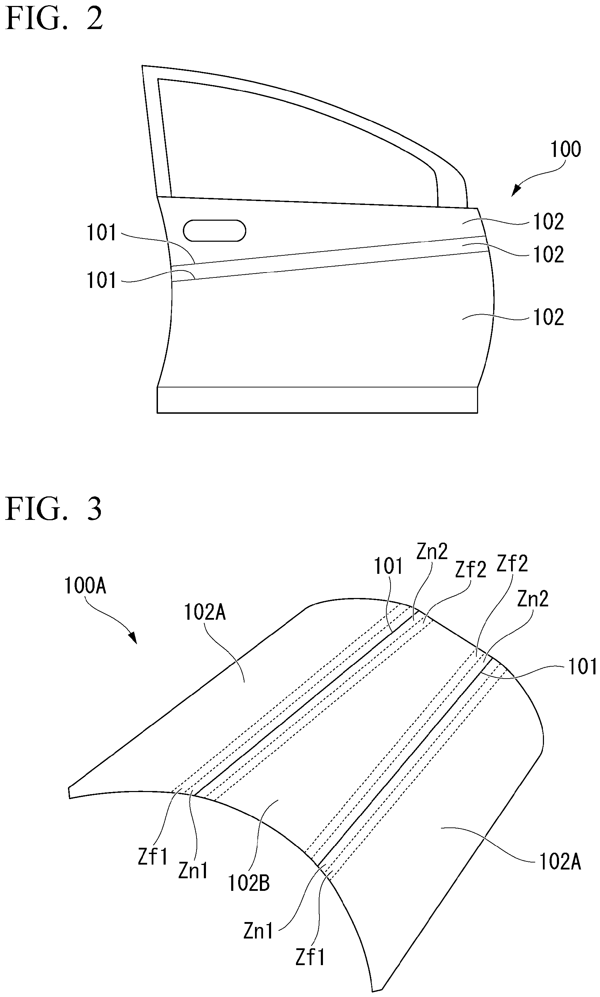

Next, the outer panel according to the present embodiment will be described in detail with reference to FIGS. 2 and 3. FIG. 2 is a side view showing the outer panel according to an embodiment of the present invention. FIG. 3 is a perspective view showing another example of the outer panel. In the present specification and the drawings, components having substantially the same functional configuration are denoted by the same reference numerals, and a redundant description thereof will be omitted.

An outer panel 100 according to the present embodiment is an outer panel that includes a ridgeline 101 and a surface portion 102 adjacent to both sides of the ridgeline on an outer surface and that has a sheet thickness of less than 0.6 mm and an attainable yield stress of 360 MPa or more. The surface portion 102 includes an adjacent region Zn adjacent to the ridgeline 101 which is a character line and a separation region Zf adjacent to the adjacent region Zn on the opposite side of the ridgeline 101 on both sides of the ridgeline 101. Evaluation of surface properties of the adjacent region Zn is consistent with evaluation of surface properties of the separation region Zf. The outer panel 100 shown in FIG. 2 is an outer panel of a front door, and an outer panel 100A shown in FIG. 3 is an outer panel of a hood.

The outer panel 100 is made of a material having an attainable yield stress of 360 MPa or more, which will be described below. The material forming the outer panel 100 is not particularly limited. For example, a steel sheet having an attainable yield stress of 360 MPa or more can be used. The chemical composition and metallographic structure of the steel sheet are not particularly limited as long as the steel sheet has an attainable yield stress of 360 MPa or more. The outer panel 100 may be manufactured using a galvanized steel sheet, and examples of the galvanized steel sheet having an attainable yield stress of 360 MPa or more include JAC390W and JAC590Y according to JFS A 3011:2020.

The sheet thickness of the outer panel 100 is less than 0.6 mm. During the press forming, compressive stress occurs inside a bend of the blank, and tensile stress occurs outside the bend. However, in a case where the sheet thickness is small, a difference between the compressive stress inside the bend and the tensile stress outside the bend is small. In other words, as the sheet thickness is smaller, stress concentration is smaller. Therefore, even in a case where the hardness of a portion in contact with the design character line on the die is greater than that of other portions in the early stage of the press forming, when the sheet thickness is less than 0.6 mm, stress concentration on the initial striking part is reduced, and the occurrence of dents due to a local reduction in the sheet thickness is suppressed. As a result, it is possible to prevent the line displacement. The sheet thickness of the outer panel 100 is preferably equal to or less than 0.5 mm and more preferably equal to or less than 0.4 mm.

The lower limit of the sheet thickness of the outer panel 100 is not particularly limited. For example, the sheet thickness can be equal to or greater than 0.35 mm. From the viewpoint of ensuring dent resistance, the sheet thickness of the outer panel 100 is preferably equal to or greater than 0.4 mm.

The sheet thickness of the outer panel 100 is a sheet thickness at a position visible as an appearance and at a position where an average radius of curvature is equal to or greater than 500 mm. The average radius of curvature means an average of the radii of curvature in two principal curvatures that define the Gaussian curvature. The sheet thickness is measured in the surface portion 102 and is measured in a region excluding a portion with a significantly small radius of curvature. The portion with a significantly small radius of curvature is, for example, a circumferential edge portion in which the radius of curvature is reduced by hemming in the outer panel 100, a portion provided with irregularities, such as a door handle, or the ridgeline 101.

The attainable yield stress of the outer panel 100 is equal to or greater than 360 MPa. When the attainable yield stress is equal to or greater than 360 MPa, it is possible to secure dent resistance. In general outer panels, the line displacement is more likely to occur as strength is higher. It is considered that the reason is as follows: strain is introduced into the blank by press forming; and, when the amount of strain is the same, the amount of hardening of a high-strength material is further increased, and a hardness difference from a non-deformed portion is further increased. However, in the outer panel 100 according to the present embodiment, since the sheet thickness is less than 0.6 mm, it is possible to suppress the line displacement as described above. Therefore, the attainable yield stress of the outer panel 100 is equal to or greater than 360 MPa. The attainable yield stress is preferably equal to or greater than 440 MPa and more preferably equal to or greater than 590 MPa.

The upper limit of the attainable yield stress of the outer panel 100 is not particularly limited. For example, the attainable yield stress can be equal to or less than 1,000 MPa. The attainable yield stress of the outer panel 100 may be equal to or less than 700 MPa from the viewpoint of formability in press forming.

The attainable yield stress of the outer panel 100 is measured by the following method. That is, the attainable yield stress is measured by performing a tensile test on a test piece cut out at a position, which is visible as an appearance and has an average radius of curvature of 500 mm or more, using a method based on JIS Z 2241:2011.

The ridgeline 101 is a portion which is curved in one direction in the outer panel 100. The ridgeline 101 is curved such that the shape of a cross section orthogonal to an extension direction is convex toward the outside of the vehicle.

The radius of curvature R in the cross-sectional shape of the ridgeline 101 is not particularly limited. For example, the radius of curvature R can be equal to or greater than 2.5 mm and equal to or less than 20 mm. In the related art, the line displacement is likely to occur when the radius of curvature R is equal to or less than 10 mm. However, in the outer panel 100 according to the present embodiment, it is possible to suppress the line displacement even when the radius of curvature R is equal to or less than 10 mm. On the other hand, in a case where the ridgeline 101 is convex toward the outside of the vehicle, the ridgeline 101 has a cross-sectional shape with a relatively gentle curve when the radius of curvature R is equal to or greater than 2.5 mm. Therefore, the damage of a contact body that comes into contact with the ridgeline 101 from the outside of the vehicle is suppressed. Therefore, in a case where the ridgeline 101 is convex toward the outside of the vehicle, the radius of curvature R is preferably equal to or greater than 2.5 mm.

The radius of curvature R means the minimum radius of curvature of the ridgeline 101 in the cross section perpendicular to the extension direction of the ridgeline 101. In a case where the ridgeline 101 has a different radius of curvature in the extension direction, the minimum radius of curvature in a cross section having the smallest radius of curvature is defined as the radius of curvature R. The radius of curvature R is measured by a three-point gauge.

The shape of the ridgeline 101 in the cross section perpendicular to the extension direction of the ridgeline 101 is a shape having curvature and can be, for example, a circular arc, an elliptical arc, a parabola, or the like.

A plurality of ridgelines 101 may be provided in the outer panel 100. The outer panel 100 shown in FIG. 2 and the outer panel 100A shown in FIG. 3 has two ridgelines 101.

An interval between at least two of the plurality of ridgelines 101 is not particularly limited and can be, for example, equal to or less than 20 mm or equal to or less than 10 mm.

The line displacement is suppressed in the outer panel 100. Therefore, the outer panel can be designed with a small interval between the ridgelines 101. In particular, even when the interval between the two ridgelines 101 is equal to or less than 20 mm or equal to or less than 10 mm, it is possible to obtain an outer panel having clear ridgelines as designed. Here, in a case where two ridgelines are not parallel to each other, it is assumed that the interval between the two ridgelines 101 is the minimum value thereof.

The surface portion 102 is adjacent to both sides of the ridgeline 101. For example, FIG. 3 shows a first surface portion 102A adjacent to the ridgeline 101 and a second surface portion 102B adjacent to the ridgeline 101 on a side opposite to the first surface portion 102A. The surface portion 102 is a flat region as compared to the ridgeline 101. The surface portion 102 is a flat surface or a curved surface having a radius of curvature larger than the radius of curvature of the ridgeline 101. The surface portion 102 has, for example, a radius of curvature that is equal to or greater than 5 times the radius of curvature of the ridgeline 101.

The surface portion 102 has an adjacent region Zn that is adjacent to the ridgeline 101 and a separation region Zf that is adjacent to the adjacent region Zn on the opposite side of the ridgeline 101. The line displacement is basically visible in the adjacent region Zn. The adjacent region Zn is, for example, a band region having a length of 20 mm in an arrangement direction with the separation region Zf, and the separation region Zf is a band region having a length of 20 mm in an arrangement direction with the adjacent region Zn. The adjacent region Zn and the separation region Zf are regions that extend in the extension direction of the ridgeline 101. FIG. 3 shows, as the adjacent region Zn and the separation region Zf with respect to one ridgeline 101, an adjacent region Zn1 and a separation region Zf1 that are disposed in the first surface portion 102A and an adjacent region Zn2 and a separation region Zf2 that are disposed in the second surface portion 102B.

In the surface portion 102, the evaluation of the surface properties of the adjacent region Zn and the evaluation of the surface properties of the separation region Zf are consistent with each other. As described above, the line displacement is basically visible in the adjacent region Zn. However, in a case where line displacement having a large angle formed with respect to the ridgeline 101 occurs, there is a possibility that line displacement in a posture intersecting a boundary line between the adjacent region Zn and the separation region Zf will be visible. Even in this case, the surface properties of the adjacent region Zn and the separation region Zf at a predetermined position on the boundary line in the longitudinal direction are different from each other. Therefore, when the evaluation of the surface properties of the adjacent region Zn and the evaluation of the surface properties of the separation region Zf are consistent with each other, it can be determined that the line displacement is suppressed. The surface properties are evaluated, for example, on the basis of a difference ΔP/B between the maximum value and the minimum value of secondary differential coefficients of the shape of the outer surface in the cross section crossing the ridgeline 101. Here, the term "crossing" means that the cross section is along a straight line forming an angle of 60° to 120° with respect to the ridgeline 101.

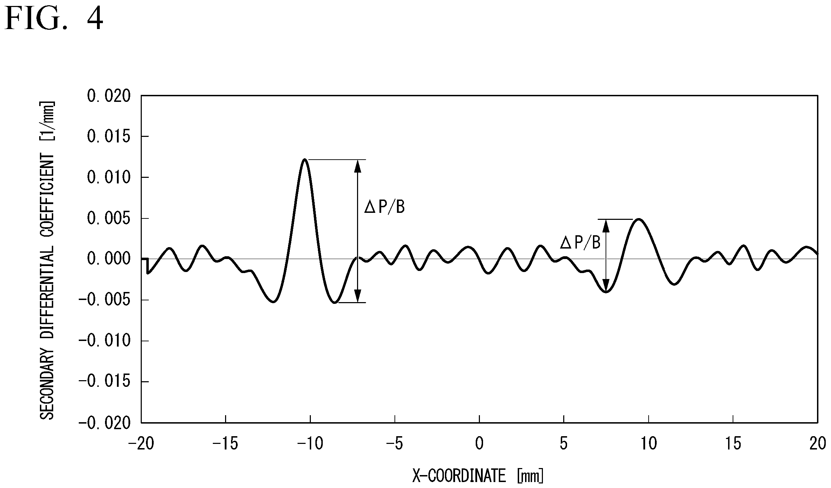

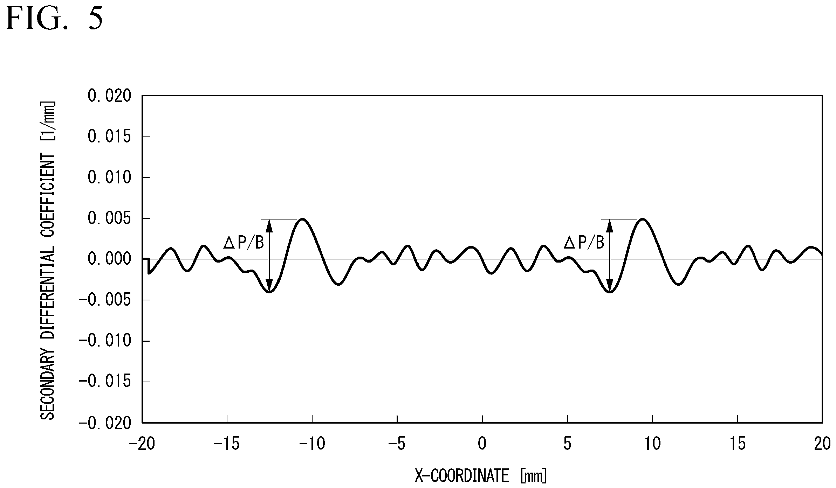

FIGS. 4 and 5 are graphs showing examples of measurement results of the secondary differential coefficients of the shape of the outer surface across the ridgeline 101. FIG. 4 is a graph showing an example of the measurement results of the secondary differential coefficients of the shape of the outer surface in which the line displacement is visible. FIG. 5 is a graph showing an example of the measurement results of the secondary differential coefficients of the shape of the outer surface in which the line displacement is not visible. The horizontal axis is the X-coordinate of an evaluation line, and the vertical axis is the secondary differential coefficient. The origin (zero) of the X-coordinate corresponds to the position of the boundary between the adjacent region Zn and the separation region Zf. Therefore, in FIGS. 4 and 5, a range in which the X-coordinate is -20 to 0 mm corresponds to the adjacent region Zn, and a range in which the X-coordinate is 0 to 20 mm corresponds to the separation region Zf. In the outer surface in which the line displacement is visible, as shown in FIG. 4, the difference ΔP/B between the maximum value and the minimum value of the secondary differential coefficients is large in the adjacent region Zn (the range of -20 to 0 mm), and the difference ΔP/B between the maximum value and the minimum value of the secondary differential coefficients is small in the separation region Zf (the range of 0 to 20 mm). On the other hand, in the outer surface in which the line displacement is not visible, as shown in FIG. 5, the difference ΔP/B between the maximum value and the minimum value of the secondary differential coefficients is small in both the adjacent region Zn and the separation region Zf.

In a case where the interval between the adjacent ridgelines 101 is 40 mm, in the surface portion 102 between the adjacent ridgelines 101, the adjacent region Zn adjacent to one ridgeline 101 and the adjacent region Zn adjacent to the other ridgeline 101 are in contact with each other. In this case, the separation region Zf for the one ridgeline 101 overlaps or is consistent with the adjacent region Zn for the other ridgeline 101 in many parts. In addition, in a case where the interval between the adjacent ridgelines 101 is less than 40 mm, the surface portion 102 between the adjacent ridgelines 101 may be divided into two regions having the same width, and the two regions may be set as the adjacent region Zn and the separation region Zf.

In the outer panel 100, the difference ΔP/B between the maximum value and the minimum value of the secondary differential coefficients of the shape of the outer surface in the adjacent region Zn measured across the ridgeline 101 is equal to or less than a predetermined threshold value. The degree of line displacement required for each product is different. Therefore, the threshold value is determined for each product. It is preferable that the difference ΔP/B between the maximum value and the minimum value of the secondary differential coefficients is equal to or less than the predetermined threshold value in both the adjacent region Zn and the separation region Zf.

In the outer panel 100, it is more preferable that the difference ΔP/B between the maximum value and the minimum value of the secondary differential coefficients of the shape of the outer surface in the adjacent region Zn and the separation region Zf measured across the ridgeline 101 is equal to or less than 0.012/mm.

As described above, the line displacement can be understood as a local reduction in the sheet thickness in the surface of the outer panel 100. However, the studies by the present inventors show that, even in a case where the step height of the surface shape is the same, the surface is likely to be recognized as poor surface quality when the surface is sharply uneven, that is, when there is a large change in curvature. The poor surface quality including the line displacement is evaluated on the basis of the secondary differential coefficients representing the curvature of the surface shape. When the difference ΔP/B between the maximum value and the minimum value of the secondary differential coefficients in the region to be evaluated is equal to or less than 0.012/mm, no line displacement is visible in the region to be evaluated. Therefore, the difference ΔP/B between the maximum value and the minimum value of the secondary differential coefficients in the region to be evaluated is preferably equal to or less than 0.012/mm. The difference ΔP/B between the maximum value and the minimum value of the secondary differential coefficients is more preferably equal to or less than 0.010/nun and even more preferably equal to or less than 0.008/mm. These are examples of an evaluation reference value and are appropriately set according to the quality level required for the appearance performance of the outer panel.

The surface properties of the adjacent region Zn and the separation region Zf are evaluated according to whether or not an index indicating the surface properties of each region is equal to or less than the evaluation reference value. In the present embodiment, the difference ΔP/B between the maximum value and the minimum value of the secondary differential coefficients of the surface shape is adopted as the index indicating the surface properties, and a value appropriately set according to the quality level required as described above is adopted as the evaluation reference value. That is, in the present embodiment, the surface properties of the adjacent region Zn and the separation region Zf are evaluated according to whether or not the difference ΔP/B between the maximum value and the minimum value of the secondary differential coefficients of the surface shape in each region is equal to or less than the evaluation reference value. The line displacement occurs in any of both sides of the ridgeline 101. Therefore, when it can be confirmed that the evaluations of the adjacent region Zn and the separation region Zf are consistent with each other for each of both sides of the ridgeline 101, it can be determined that the surface has a beautiful appearance in which the line displacement caused by the forming of the ridgeline 101 has been suppressed.

Shape data of the surface shape for which the secondary differential coefficients are to be calculated is preferably obtained using a non-contact-type laser shape measurement device. In the present embodiment, the surface shape of the outer panel 100 is measured using a laser microscope having high measurement accuracy. When the shape data with high measurement accuracy is used, the curvature of the surface shape is appropriately reflected in the obtained secondary differential coefficients. In addition, in a case where a contact-type shape measurement device is used, the curvature of the surface shape may not be appropriately reflected in the secondary differential coefficients of the shape data due to the influence of, for example, mechanical measurement noise or the like included in the shape data. In this case, in order to obtain data in which the curvature has been appropriately reflected, a filtering process may be performed on the shape data to remove unnecessary components, or tertiary differential coefficients or quaternary differential coefficients of the shape data may be calculated instead of the secondary differential coefficients.

The surface shape data is acquired by shape measurement in a scanning direction crossing the ridgeline 101 of the outer panel 100. In the present embodiment, the shape measurement is performed at one position of a central portion of the ridgeline 101 in the longitudinal direction. The secondary differential coefficients are calculated from the obtained surface shape data, and the differences ΔP/B between the maximum value and the minimum value of the secondary differential coefficients in each of the ranges corresponding to the adjacent region Zn and the separation region Zf in the scanning direction is calculated. Then, the surface properties of each of the adjacent region Zn and the separation region Zf are evaluated according to whether or not ΔP/B in each range is equal to or less than the evaluation reference value. In the outer panel 100 according to the present embodiment, all of these evaluations are equal to or less than the evaluation reference values, and the evaluations are consistent with each other.

Considering the possibility that the line displacement in the posture intersecting the boundary line between the adjacent region Zn and the separation region Zf will be visible, it is preferable that the shape measurement is performed at a plurality of positions on the ridgeline 101 in the longitudinal direction and the evaluations of the surface properties of the adjacent region Zn and the separation region Zf at all of the plurality of positions are consistent with each other. The plurality of positions may include at least a position in the central portion of the ridgeline 101 in the longitudinal direction, and may be, for example, a plurality of positions that are dispersed in the entire ridgeline in the longitudinal direction and that include the positions in end portions in the longitudinal direction or a plurality of positions that are concentrated in the central portion in the longitudinal direction. The outer surface quality of the central portion of the character line in the longitudinal direction has a high degree of influence on the impression of the design. Therefore, the beautiful impression of the outer panel without the line displacement in this portion is less likely to be spoiled. Therefore, in order to ensure a beautiful appearance, it is important that there is no line displacement in the central portion of the ridgeline 101 in the longitudinal direction.

A known press forming apparatus may be used to manufacture the outer panel according to the present embodiment. The technique applied to the outer panel according to the present embodiment is a technique that performs press forming on a blank having a small sheet thickness to suppress the line displacement, without introducing a complicated mechanism for suppressing the line displacement. Therefore, it is possible to manufacture an outer panel having a beautiful appearance using a press forming apparatus having a relatively simple configuration. Of course, in order to further improve the surface quality of the outer panel, the outer panel according to the present embodiment may be manufactured using a press forming apparatus having a complicated mechanism. In the manufacture of the outer panel according to the present embodiment, a plurality of ridgelines may be formed such that the ridgelines do not intersect each other. In addition, a plurality of ridgelines may be formed such that the interval (the shortest distance along the outer surface of the outer panel) between at least two of the plurality of ridgelines is 20 mm. Further, a plurality of ridgelines may be formed such that two or more of the plurality of ridgelines intersect each other.

The present invention has been described above on the basis of the preferred embodiment of the present invention. However, the present invention is not limited thereto. The above description is only an example, and any component that has substantially the same configuration as the technical idea described in the claims of the present invention and that has the same operation and effect as the technical idea is included in the technical scope of the present invention.

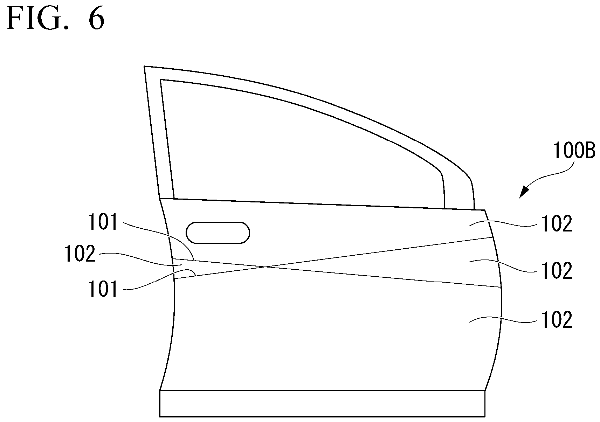

For example, in the above-described embodiment, a case where the plurality of ridgelines 101 do not intersect each other has been described. However, the disposition of the plurality of ridgelines 101 is not limited thereto. For example, as shown in FIG. 6, the ridgelines 101 may intersect each other.

In addition, for example, in FIGS. 2, 3, and 6, two ridgelines 101 are shown. However, the number of ridgelines 101 may be one or three or more.

In a case where three or more ridgelines 101 are disposed, all of the ridgelines 101 may not intersect each other, or at least two of the plurality of ridgelines 101 may intersect each other.

In addition, for example, in the evaluation of the surface properties, the amount of reduction in sheet thickness may be adopted as the index indicating the surface properties. In this case, the surface properties of the adjacent region Zn are evaluated according to whether or not the amount of reduction in sheet thickness in the adjacent region Zn is equal to or less than evaluation criteria. Similarly, the surface properties of the adjacent region Zn are evaluated according to whether or not the amount of reduction in sheet thickness in the separation region Zf is equal to or less than the evaluation criteria. When the evaluation results of both are the same, it can be determined that the line displacement caused by the formation of the ridgeline is suppressed. The evaluation criteria may be determined on the basis of the results of a sensory test regarding the visibility of the line displacement.

In addition, for example, in FIGS. 2 and 6, the outer panel of the front door constituting the vehicle is shown as an example of the outer panel. In FIG. 3, the outer panel of the hood is shown as an example of the outer panel. However, the outer panel according to the present disclosure may be applied not only to the front door or the hood but also to a rear door, a front fender, a rear fender, a roof, or a back door.

Hereinafter, a test example led to the finding as the basis of the present invention, that is, the finding that, when a sheet thickness is reduced, a difference between stress inside a bend and stress outside the bend occurring during press forming is reduced, the occurrence of a local reduction in the sheet thickness is suppressed, and the line displacement is suppressed will be described.

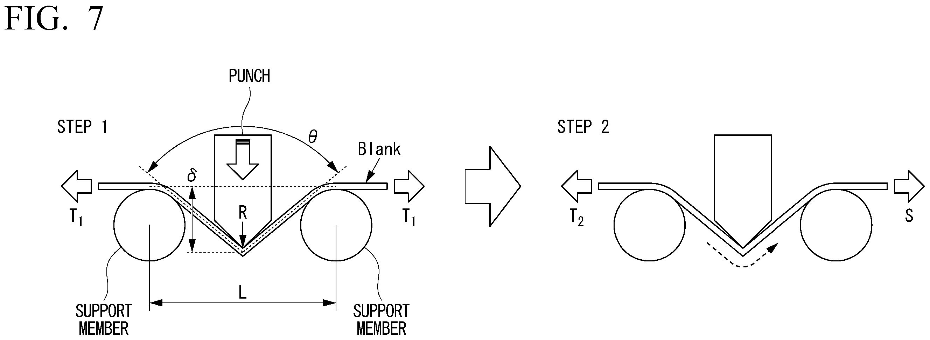

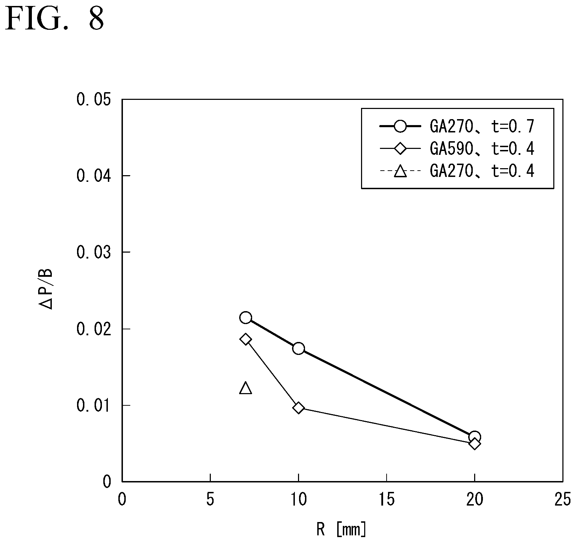

A test piece of a hot-dip galvannealed steel sheet having a tensile strength of 270 MPa and a sheet thickness of 0.7 mm, a test piece of a hot-dip galvannealed steel sheet having a tensile strength of 590 MPa and a sheet thickness of 0.4 mm, and a test piece of a hot-dip galvannealed steel sheet having a tensile strength of 270 MPa and a sheet thickness of 0.7 mm were prepared. Each test piece was formed in a strip shape having a length of 500 mm in a rolling direction and a length of 60 mm in a width direction. As shown in FIG. 7, the test piece (blank in FIG. 7) was supported by two support members. A distance L between the centers of the two support members was set to 150 mm. Both ends of each test piece in the rolling direction were clamped with chucks (not shown) and pulled in opposite directions to apply tension T1 to the test piece. In a state in which tension T1 was applied to the test piece, a punch having a tip in an arc shape with a radius of curvature R was pressed into the test piece by an amount of pressure δ such that a bending angle θ was 170°. Then, the test piece was moved in one direction (a direction represented by "s" in FIG. 7) in a state in which the tension T2 in the same direction as the tension T1 was applied. Then, the punch was released. The magnitudes of the tension T1 and the tension T2 were set such that s/YP was 1.25. Here, s is nominal stress and is a value obtained by dividing the tension T1 or the tension T2 by the length of the test piece in the width direction and the sheet thickness of the test piece. YP is yield stress. Therefore, s/YP is a dimensionless number. The movement of the test piece is a simulation of a flow of a material during press forming. The radius of curvature R of the tip of the punch was set to 7 mm, 10 mm, and 20 mm. The results are shown in FIG. 8. FIG. 8 is a graph showing a relationship between the radius of curvature R of the ridgeline and the difference ΔP/B between the maximum value and the minimum value of the secondary differential coefficients of the surface shape of the test piece when the strength and sheet thickness of the steel sheet are changed. In FIG. 8, "GA270, t = 0.7" indicates test results for a hot-dip galvannealed steel sheet having a tensile strength of 270 MPa and a sheet thickness of 0.7 mm, "GA590, t = 0.4" indicates test results for a hot-dip galvannealed steel sheet having a tensile strength of 270 MPa and a sheet thickness of 0.7 mm, and "GA270, t = 0.4" indicates test results for a hot-dip galvannealed steel sheet having a tensile strength of 270 MPa and a sheet thickness of 0.7 mm.

As shown in FIG. 8, it was found that, as the sheet thickness was smaller, the difference ΔP/B between the maximum value and the minimum value of the secondary differential coefficients was smaller. In addition, it was found that, even in a case where the tensile strength was 590 MPa, the sheet thickness could be reduced to decrease the difference ΔP/B between the maximum value and the minimum value of the secondary differential coefficients.

### REFERENCE SIGNS LIST

100, 100A, 100B Outer panel
101 Ridgeline
102, 102A, 102B Surface portion
Zn (Zn1, Zn2) Adjacent region
Zf (Zf1, Zf2) Separation region

## Claims

1. An outer panel comprising:
a ridgeline and a surface portion adjacent to both sides of the ridgeline on an outer surface,
wherein the outer panel has a sheet thickness of less than 0.6 mm and an attainable yield stress of 360 MPa or more,
the surface portion includes an adjacent region adjacent to the ridgeline and a separation region adjacent to the adjacent region on an opposite side of the ridgeline on both sides of the ridgeline, and
an evaluation of surface properties of the adjacent region and an evaluation of surface properties of the separation region are consistent with each other.

2. The outer panel according to Claim 1,
wherein the adjacent region is a band region having a length of 20 mm in an arrangement direction with the separation region, and
the separation region is a band region having a length of 20 mm in an arrangement direction with the adjacent region.

3. The outer panel according to Claim 1 or 2,
wherein the evaluation is an evaluation based on a difference between a maximum value and a minimum value of secondary differential coefficients of a shape of the outer surface in a cross section crossing the ridgeline.

4. The outer panel according to Claim 1 or 2,
wherein a radius of curvature of the ridgeline in a cross section orthogonal to the ridgeline is equal to or less than 20 mm.

5. The outer panel according to Claim 1 or 2,
wherein a plurality of the ridgelines are provided, and
the ridgelines do not intersect each other.

6. The outer panel according to Claim 5,
wherein an interval between at least two of the plurality of ridgelines is less than 20 mm.

7. The outer panel according to Claim 1 or 2,
wherein a plurality of the ridgelines are provided, and
two or more of the plurality of ridgelines intersect each other.

8. The outer panel according to Claim 1 or 2,
wherein the outer panel is made of steel.

9. The outer panel according to Claim 8,
wherein the outer panel has a sheet thickness of 0.5 mm or less and an attainable yield stress of 590 MPa or more, and
a radius of curvature of the ridgeline in a cross section orthogonal to the ridgeline is equal to or less than 10 mm.

10. The outer panel according to Claim 3,
wherein a difference ΔP/B between a maximum value and a minimum value of secondary differential coefficients of the shape of the outer surface in both the adjacent region and the separation region measured across the ridgeline is equal to or less than 0.012/mm.

11. The outer panel according to Claim 1 or 2,
wherein the evaluation is an evaluation based on an amount of reduction in the sheet thickness.

12. An outer panel comprising:
a ridgeline and a surface portion adjacent to both sides of the ridgeline on an outer surface,
wherein the outer panel has a sheet thickness of less than 0.6 mm and an attainable yield stress of 360 MPa or more,
the surface portion includes an adjacent region adjacent to the ridgeline and a separation region adjacent to the adjacent region on an opposite side of the ridgeline on both sides of the ridgeline, and
a difference ΔP/B between a maximum value and a minimum value of secondary differential coefficients of a shape of the outer surface in the adjacent region measured across the ridgeline is equal to or less than 0.012/mm.
